# EUROPEAN PATENT APPLICATION

(11) **EP 4 831 260 A1**
(43) Date of publication of application: **28.10.2026**
(21) Application number: 25744886.0
(22) Date of filing: 14.01.2025
(51) Int. Cl.: C09K 3/18, D21H 17/04, D21H 21/14, D21J 5/00

(54) **AGENT FOR IMPARTING OIL RESISTANCE**

(30) Priority: 22.01.2024 JP 2024007567
(71) Applicant: DAIKIN INDUSTRIES, LTD., Osaka-shi, Osaka 530-0001 (JP)
(72) Inventor: AKUTA, Ryo, Osaka-Shi, Osaka 530-0001 (JP); SHIBATA, Shun, Osaka-Shi, Osaka 530-0001 (JP)
(74) Representative: Hoffmann Eitle
(86) International application number: PCT/JP2025/000832
(87) International publication number: WO 2025/158955

(57) **Abstract**

Provided is an oil-resistant agent comprising a wax, wherein,
in the ¹H-NMR spectrum of the wax, the ratio of an integral value [integral value B] of a signal observed at a chemical shift of 1.05 ppm or more and 1.47 ppm or less to an integral value [integral value A] of a signal observed at a chemical shift of 0.79 ppm or more and 0.93 ppm or less, [integral value B]/[integral value A], is 9 or more.

## Description

### Technical Field

The present disclosure relates to a repellent, and in particular to an oil-resistant agent.

### Background Art

Patent Literature 1 discloses a paper substrate for oxygen-absorbing packaging materials, which comprises a wax having a melting point of 50°C or more and 80°C or less.

### Citation List

### Patent Literature

Patent Literature 1: JP 2023-113289 A

### Summary of Invention

### Technical Problem

Patent Literature 1 neither describes nor suggests an oil-resistant agent comprising a wax having a specific chemical shift value in a ¹H-NMR spectrum and/or a specific peak intensity in temperature-variable X-ray diffraction measurement.

An object of the present disclosure is to provide a novel oil-resistant agent capable of imparting oil resistance to a substrate (in particular, a pulp substrate).

### Solution to Problem

The present disclosure includes the following embodiments.

### [Item 1]

An oil-resistant agent comprising a wax, wherein,
in the ¹H-NMR spectrum of the wax, the ratio of an integral value [integral value B] of a signal observed at a chemical shift of 1.05 ppm or more and 1.47 ppm or less to an integral value [integral value A] of a signal observed at a chemical shift of 0.79 ppm or more and 0.93 ppm or less, [integral value B]/[integral value A], is 9 or more.

### [Item 2]

The oil-resistant agent according to item 1, wherein,
in the temperature-variable X-ray diffraction measurement of the wax, the diffraction intensity ratio [A60°C]/[A25°C] of a maximum peak intensity [A60°C] at a measurement temperature of 60°C to a maximum peak intensity [A25°C] at a measurement temperature of 25°C in the region where 2θ is 15° or more and 30° or less is 0.3 or more.

### [Item 3]

The oil-resistant agent according to item 1 or 2, wherein the wax is a petroleum wax.

### [Item 4]

The oil-resistant agent according to any one of items 1 to 3, wherein the wax is at least one selected from the group consisting of a paraffin wax and a microcrystalline wax.

### [Item 5]

The oil-resistant agent according to any one of items 1 to 4, wherein the wax has a melting point of 55°C or more.

### [Item 6]

The oil-resistant agent according to any one of items 1 to 5, wherein the oil-resistant agent is an aqueous dispersion.

### [Item 7]

The oil-resistant agent according to any one of items 1 to 6, wherein
the oil-resistant agent comprises a dispersant, and
the dispersant is at least one selected from the group consisting of a nonionic dispersant, an anionic dispersant, and a cationic dispersant.

### [Item 8]

The oil-resistant agent according to any one of items 1 to 7, wherein
the oil-resistant agent is an aqueous dispersion,
the oil-resistant agent comprises a dispersant, and
the volume median diameter (D50) of the oil-resistant agent, as measured by laser diffraction scattering, is 0.01 µm or more and 1 µm or less.

### [Item 9]

The oil-resistant agent according to any one of items 1 to 8, wherein the oil-resistant agent has a charge density of -600 µeq/g or more and 600 µeq/g or less.

### [Item 10]

The oil-resistant agent according to any one of items 1 to 9, wherein
the oil-resistant agent comprises a liquid medium, and
in the temperature-variable X-ray diffraction measurement of a residue obtained by removing the liquid medium from the oil-resistant agent, the diffraction intensity ratio [A60°C]/[A25°C] of a maximum peak intensity [A60°C] at a measurement temperature of 60°C to a maximum peak intensity [A25°C] at a measurement temperature of 25°C in the region where 2θ is 15° or more and 30° or less is 0.3 or more.

### [Item 11]

The oil-resistant agent according to any one of items 2 to 10, wherein
the ratio of integral values [integral value B]/[integral value A] is 9.5 or more and 12 or less, and
the diffraction intensity ratio [A60°C]/[A25°C] is 0.5 or more and 0.9 or less.

### [Item 12]

The oil-resistant agent according to any one of items 1 to 11, wherein the oil-resistant agent is for a pulp product.

### [Item 13]

The oil-resistant agent according to item 12, wherein the pulp product is a product for food contact.

### [Item 14]

The oil-resistant agent according to item 12 or 13, wherein the oil-resistant agent is for internal addition.

### [Item 15]

A pulp composition comprising the oil-resistant agent according to any one of items 1 to 14 and a pulp substrate.

### [Item 16]

A pulp product obtained by treating a pulp substrate with the oil-resistant agent according to any one of items 1 to 14.

### [Item 17]

A method for producing a pulp product, comprising treating a pulp substrate with the oil-resistant agent according to any one of items 1 to 14.

### Advantageous Effect of Invention

According to the present disclosure, oil resistance can be imparted to a substrate (in particular, a pulp substrate).

### Description of Embodiments

### <Repellent (oil-resistant agent)>

The repellent in present disclosure adheres to a substrate (in particular, a pulp substrate) and imparts liquid-repellency, for example, water resistance, oil resistance, water-repellency, oil-repellency and/or antifouling properties to the substrate, and may function as a water-resistant agent, an oil-resistant agent, a water-repellent agent, an oil-repellent agent and/or an antifouling agent. The repellent of the present disclosure is particularly suitable as an oil-resistant agent that imparts oil resistance to a substrate.

The repellent in the present disclosure includes a wax, in particular petroleum-based wax (for example, hydrocarbon-based wax), as the active ingredient. The wax itself may be used as a repellent, or may be combined with other components described below and used as a repellent.

The repellent of the present disclosure may not include one selected from the group consisting of a compound having a fluoroalkyl group having 8 or more carbon atoms, a compound having a perfluoroalkyl group having 8 or more carbon atoms, a compound having a fluoroalkyl group having 4 or more carbon atoms, a compound having a perfluoroalkyl group having 4 or more carbon atoms, a compound having a perfluoroalkyl group, a compound having a fluoroalkyl group and a compound having a fluorine atom. The repellent of the present disclosure can impart liquid-repellency to a substrate without these fluorine compounds.

The volume abundance ratio of particles with a size of 100 µm or larger in the repellent of the present disclosure may be 0.1% or more, 0.3% or more, 0.5% or more, 1% or more, 1.5% or more, 3% or more, 4% or more, 5% or more, or 10% or more, and may be 50% or less, 30% or less, 20% or less, 15% or less, 10% or less, 5% or less, 3% or less, or 1.5% or less, preferably 20% or less, and more preferably 5% or less, as measured by laser diffraction scattering. The method for setting the volume abundance ratio of the particles to the above range is not limited, and for example, particles in the raw material and/or dispersion may be formed into fine particles using a pulverizer or a homogenizer.

The volume abundance ratio of particles with a size of 10 µm or larger in the composition of the present disclosure may be 0.1% or more, 0.3% or more, 0.5% or more, 1% or more, 1.5% or more, 3% or more, 4% or more, 5% or more, or 10% or more, and may be 50% or less, 30% or less, 20% or less, 15% or less, 10% or less, 5% or less, 3% or less, or 1.5% or less, preferably 30% or less, and more preferably 15% or less, as measured by laser diffraction scattering. The method for setting the volume abundance ratio of the particles to the above range is not limited, and for example, particles in the raw material and/or dispersion may be formed into fine particles using a pulverizer or a homogenizer.

The volume median diameter of the repellent in the present disclosure as measured by laser diffraction scattering may be 0.01 µm or more, 0.05 µm or more, 0.1 µm or more, 0.2 µm or more, 0.3 µm or more, 0.4 µm or more, 0.5 µm or more, or 0.6 µm or more, and may be 10 µm or less, 5 µm or less, 3 µm or less, 1 µm or less, 0.9 µm or less, 0.8 µm or less, 0.7 µm or less, 0.6 µm or less, 0.5 µm or less, 0.4 µm or less, 0.3 µm or less, or 0.2 µm or less, and is preferably 1 µm or less, in an embodiment, 0.01 µm or more and 1 µm or less. In the present disclosure, the volume median diameter refers to the median diameter (D50) in a volume-based particle size distribution by laser diffraction scattering.

The average particle size, obtained from an observation image by a scanning electron microscope, of the particle obtained by removing liquid medium from repellent (e.g., an oil resistant agent for pulp) which is the water-dispersible composition in the present disclosure by air dry at room temperature may be 0.01 µm or more, 0.05 µm or more, 0.1 µm or more, 0.2 µm or more, 0.3 µm or more, 0.4 µm or more, 0.5 µm or more, or 0.6 µm or more, and 10 µm or less, 5 µm or less, 3 µm or less, 1 µm or less, 0.9 µm or less, 0.8 µm or less, 0.7 µm or less, 0.6 µm or less, 0.5 µm or less, 0.4 µm or less, 0.3 µm or less, or 0.2 µm or less, and is preferably 1 µm or less. To set the particle size to the above range, for example, particles in the raw material and/or dispersion may be formed into fine particles using a pulverizer or a homogenizer. The room temperature means 20°C to 30°C, in particular 25°C.

The ionic charge density of the repellent in the present disclosure may be -1,000 µeq/g or more, -800 µeq/g or more, -600 µeq/g or more, -500 µeq/g or more, - 400 µeq/g or more, -250 µeq/g or more, -100 µeq/g or more, -50 µeq/g or more, -25 µeq/g or more, 0 µeq/g or more, 1 µeq/g or more, 25 µeq/g or more, 50 µeq/g or more, 100 µeq/g or more, or 200 µeq/g or more, and is preferably -600 µeq/g or more, and may be, for example, - 400 µeq/g or more, -200 µeq/g or more, or -50 µeq/g or more, and may be 5,000 µeq/g or less, 2,500 µeq/g or less, 1,000 µeq/g or less, 750 µeq/g or less, 600 µeq/g or less, 500 µeq/g or less, 400 µeq/g or less, 350 µeq/g or less, 300 µeq/g or less, 200 µeq/g or less, 100 µeq/g or less, or 50 µeq/g or less, and is preferably 1,000 µeq/g or less, more preferably 500 µeq/g or less, for example 300 µeq/g or less, particularly 100 µeq/g or less, and may be, in a preferred embodiment, -600 µeq/g or more and 600 µeq/g or less, and is particularly -100 µeq/g or more and 100 µeq/g or less. The ionic charge density of the repellent in the present disclosure may be measured by, for example, the following method.

The anion requirement of a sample solution having a solid content of 0.1 g/L is measured by a particle charge meter (MUTEK PCD-06 manufactured by BTG) using a 1/1,000 N potassium polyvinylsulfonate solution to calculate the ionic charge density (cationic charge density) by the following equation (1). Alternatively, the cation requirement is measured in the same manner by using poly(diallyldimethylammonium chloride) solution instead of the potassium polyvinylsulfonate solution to calculate the ionic charge density (anionic charge density) by the following equation (1). $Ionic charge density \left(μeq/g\right) = A / B$ (1)
A: cation requirement or anion requirement (µeq/L)
B: Concentration of sample solution (g/L)

When the composition comprises a liquid medium (for example, when the repellent is an aqueous dispersion), in the temperature-variable X-ray diffraction measurement of a residue obtained by removing the liquid medium from the repellent, the diffraction intensity ratio [A60°C]/[A25°C] of a maximum peak intensity [A60°C] at a measurement temperature of 60°C to a maximum peak intensity [A25°C] at a measurement temperature of 25°C in the region where 2θ is 15° or more and 30° or less may be 0.3 or more, 0.4 or more, 0.5 or more, 0.6 or more, 0.7 or more, 0.8 or more, or 0.9 or more, and is preferably 0.5 or more, and may be 1.2 or less, 1.0 or less, 0.9 or less, 0.8 or less, or 0.7 or less, and is, in an embodiment, 0.3 or more and 1.0 or less, for example 0.5 or more and 0.9 or less. In the case of a repellent having a high diffraction intensity ratio (for example, a ratio equal to or higher than the above lower limit), the repellent contains a component that retains the characteristic crystal structure even at 60°C. Due to such a structure, the effect of the present disclosure is considered to be favorably achieved. The temperature-variable X-ray diffraction measurement, that is, temperature-variable XRD (XRD-DSC) measurement, is performed by using Cu Kα radiation as the light source, by cooling to -20°C, and then heating to 25°C or 60°C at 5°C/min, holding for 5 minutes under a nitrogen atmosphere, and then performing the measurement. SmartLab manufactured by RIGAKU may be used as the measurement apparatus.

The liquid medium is removed from the repellent by natural drying at room temperature, followed by drying under reduced pressure for 24 hours.

### {Wax}

The repellent in the present disclosure comprises wax, in particular hydrocarbon wax. The wax may be an organic material that is solid at room temperature and liquid when heated. For example, the wax may be a hydrocarbon compound or a compound having a hydrocarbon group having 6 or more and 40 or less carbon atoms (e.g., an alkyl group).

The wax in the present disclosure adheres to a substrate (in particular, a pulp substrate) and imparts liquid repellency such as water resistance, oil resistance, water-repellency, oil-repellency and/or antifouling properties to the substrate.

### [Characteristics of wax]

Characteristics of the wax will be described below.

The wax may be in the form of particles (powder). The average particle size of the wax may be 0.01 µm or more, 0.05 µm or more, 0.1 µm or more, 0.2 µm or more, 0.3 µm or more, 0.4 µm or more, 0.5 µm or more, or 0.6 µm or more, and 10 µm or less, 5 µm or less, 3 µm or less, 1 µm or less, 0.9 µm or less, 0.8 µm or less, 0.7 µm or less, 0.6 µm or less, 0.5 µm or less, 0.4 µm or less, 0.3 µm or less, or 0.2 µm or less, and is preferably 1 µm or less. The above particle size is the primary particle size. The average particle size in the above range provides excellent particle stability and may improve liquid repellency. The average particle size may be measured by a microscope (scanning electron microscope). Specifically, a sample of wax particles is observed under a microscope at any magnification. Next, when the form of particles is spherical, the diameter is considered as the particle size, and when the form of particles is non-spherical, the average of the largest major axis and the largest minor axis is regarded as the particle size. By repeating measuring the particle size of all particles present in a field of view and moving to a different field of view and measuring the particle size again, 100 or more particle sizes are measured, and the average of those is defined as the average particle size.

The HD (n-hexadecane) contact angle of the wax may be 10° or more, 20° or more, 25° or more, 30° or more, 35° or more, 40° or more, 45° or more, 50° or more, 55° or more, 60° or more, or 65° or more, and is preferably 25° or more, more preferably 30° or more, and may be 100° or less, 90° or less, or 75° or less. A HD contact angle of the wax of the lower limit or more can impart good liquid-repellency (in particular oil-repellency) to a substrate. The HD contact angle is a static contact angle of HD on a spin-coated film of the wax, which is obtained by dropping 2 µL of HD on a spin-coated film and measuring the contact angle one second after the droplet reaches the film.

The wax may have a water contact angle of 35° or more, 40° or more, 45° or more, 50° or more, 55° or more, 65° or more, 75° or more, 85° or more, 90° or more, or 100° or more, and may have 160° or less, 140° or less, 130° or less, 120° or less, 110° or less, 100° or less or 90° or less. A water contact angle of the wax of the lower limit or more can impart good liquid-repellency (in particular water-repellency) to a substrate. The water contact angle is a static contact angle of water on a spin-coated film of the wax, which is obtained by dropping 2 µL of water on a spin-coated film and measuring the contact angle one second after the droplet reaches the film.

The wax may be a low molecular weight compound (having a molecular weight of, for example, 1,000 or less or 500 or less) or a high molecular weight compound. When the wax is a high molecular weight compound, the wax may have a weight average molecular weight of 1,000 or more, 3,000 or more, 5,000 or more, 7,500 or more, 10,000 or more, 30,000 or more, 100,000 or more, 300,000 or more, or 500,000 or more, and 10,000,000 or less, 7,500,000 or less, 5,000,000 or less, 3,000,000 or less, 1,000,000 or less, 750,000 or less, 500,000 or less, 300,000 or less, 100,000 or less, 75,000 or less, 50,000 or less, 30,000 or less, 10,000 or less, 7,500 or less, 5,000 or less, or 3,000 or less.

The melting point of the wax may be 30°C or more, 40°C or more, 50°C or more, 60°C or more, 80°C or more, 100°C or more, or 120°C or more, and is preferably 40°C or more, particularly preferably 55°C or more, and may be 250°C or less, 225°C or less, 200°C or less, 150°C or less, 130°C or less, 120°C or less, 110°C or less, 100°C or less, 80°C or less, or 50°C or less, and is preferably 120°C or less. The melting point of the wax may be measured according to JIS K 2235-1991. The melting point usually corresponds to the peak top temperature of the endothermic peak at a maximum temperature before melting observed in DSC (differential scanning calorimetry).

The ratio of an integral value [integral value B] of a signal observed at a chemical shift of 1.05 ppm or more and 1.47 ppm or less to an integral value [integral value A] of a signal observed at a chemical shift of 0.79 ppm or more and 0.93 ppm or less in the ¹H-NMR spectrum of the wax, [integral value B]/[integral value A], may be 9 or more, 9.5 or more, 10 or more, 10.5 or more, 11 or more, 11.5 or more, 12 or more, 12.5 or more, 13 or more, 13.5 or more, or 14 or more, and is preferably 9.5 or more, and may be 25 or less, 22 or less, 20 or less, 18 or less, 16 or less, 14 or less, 13 or less, or 12 or less, and is, in an embodiment, 9 or more and 20 or less, for example 9.5 or more and 14 or less. In the case of a wax having a high integral value ratio, for example, a ratio equal to or higher than the above lower limit, the abundance ratio of methylene hydrogen relative to methyl hydrogen increases, and the wax may have a hydrocarbon structure with fewer branches. Due to such a structure, the effect of the present disclosure is considered to be favorably achieved. The ¹H-NMR measurement is performed on a sample solution prepared by dissolving the wax in deuterated chloroform.

The diffraction intensity ratio [A60°C]/[A25°C] of a maximum peak intensity [A60°C] at a measurement temperature of 60°C to a maximum peak intensity [A25°C] at a measurement temperature of 25°C in the temperature-variable X-ray diffraction measurement of the wax in the region where 2θ is 15° or more and 30° or less may be 0.3 or more, 0.4 or more, 0.5 or more, 0.6 or more, 0.7 or more, 0.8 or more, or 0.9 or more, and is preferably 0.5 or more, and may be 1.2 or less, 1.0 or less, 0.9 or less, 0.8 or less, or 0.7 or less, and is, in an embodiment, 0.3 or more and 1.0 or less, for example 0.5 or more and 0.9 or less. In the case of a wax having a high diffraction intensity ratio, for example, a ratio equal to or higher than the above lower limit, the wax has a characteristic crystal structure even at 60°C.. Due to such a structure, the effect of the present disclosure is considered to be favorably achieved. The temperature-variable X-ray diffraction measurement, that is, temperature-variable XRD (XRD-DSC) measurement, is performed by using Cu Kα radiation as the light source, by cooling to -20°C, and then heating to 25°C or 60°C at 5°C/min, holding for 5 minutes under a nitrogen atmosphere, and then performing the measurement. SmartLab manufactured by RIGAKU may be used as the measurement apparatus.

### [Types of Wax]

Examples of the wax include mineral waxes (petroleum waxes) such as paraffin wax, microcrystalline wax, montan wax, ozokerite wax, ceresin wax, and petrolatum wax; and synthetic waxes such as Fischer-Tropsch wax, polyethylene wax, and polypropylene wax, and the wax is preferably paraffin wax or microcrystalline wax. The wax in the present disclosure may be a hydrocarbon wax, and is preferably a chain aliphatic hydrocarbon, and may be, for example a linear or branched hydrocarbon, and is particularly a linear hydrocarbon.

### [Amount of wax]

The amount of wax may be 0.01% by weight or more, 0.5% by weight or more, 1% by weight or more, 3% by weight or more, 5% by weight or more, 10% by weight or more, 20% by weight or more, 30% by weight or more, 50% by weight or more, 70% by weight or more, or 80% by weight or more, and 95% by weight or less, 90% by weight or less, 80% by weight or less, 70% by weight or less, 60% by weight or less, 50% by weight or less, 40% by weight or less, 30% by weight or less, 20% by weight or less, 10% by weight or less, 5% by weight or less, or 3% by weight or less in the repellent. Wax may be singly used as a repellent.

### {Dispersant}

The repellent in the present disclosure may comprise a dispersant. The dispersant may be at least one selected from an organic dispersant and an inorganic dispersant. The dispersant may be at least one selected from an anionic dispersant, a nonionic dispersant, a cationic dispersant, an amphoteric dispersant and an inorganic dispersant.

An organic dispersant and an inorganic dispersant may be used as the dispersant, respectively, or an organic dispersant and an inorganic dispersant may be used in combination.

An organic dispersant may be used as the dispersant. The organic dispersant may be classified into a nonionic dispersant, an anionic dispersant, a cationic dispersant and an amphoteric dispersant. The organic dispersant may mean a surfactant.

The dispersant may have no fluorine.

### [Nonionic dispersant]

The dispersant may comprise a nonionic dispersant. The nonionic dispersant may be a nonionic surfactant.

The nonionic dispersant may be of low molecular weight (for example, with a molecular weight of 2,000 or less, particularly 10,000 or less), or may be of high molecular weight (for example, with a molecular weight of 2,000 or more). The nonionic dispersant may have a molecular weight of 100 or more, 500 or more, 1,000 or more, 2,000 or more, 4,000 or more, or 6,000 or more, and may be 1,000,000 or less, 750,000 or less, 500,000 or less, 250,000 or less, 100,000 or less, 50,000 or less, 25,000 or less, 10,000 or less, 7,500 or less, 5,000 or less, 2,500 or less, 750 or less, or 250 or less.

Examples of nonionic dispersant include ether, ester, ester ether, alkanolamide, polyol and amine oxide.

The ether is, for example, a compound having an oxyalkylene group (preferably a polyoxyethylene group).

The ester is, for example, an ester of an alcohol and a fatty acid. The alcohol is, for example, an alcohol which is 1 to 30 hydric (particularly dihydric to decahydric) and has 1 to 50 carbon atoms (particularly 10 to 30 carbon atoms) (for example, an aliphatic alcohol). Examples of the fatty acids are saturated or unsaturated fatty acids having 2 to 50 carbon atoms, particularly 5 to 30 carbon atoms.

The ester ether is, for example, a compound in which an alkylene oxide (particularly ethylene oxide) is added to an ester of an alcohol and a fatty acid. The alcohol is, for example, an alcohol which is 1 to 30 hydric (particularly dihydric to decahydric) and has 1 to 50 carbon atoms (particularly 3 to 30 carbon atoms) (for example, an aliphatic alcohol). Examples of the fatty acids are saturated or unsaturated fatty acids having 2 to 50 carbon atoms, particularly 5 to 30 carbon atoms.

The alkanolamide is formed of for example, a fatty acid and an alkanolamine. The alkanolamide may be a monoalkanolamide or a dialkanolamide. Examples of the fatty acids are saturated or unsaturated fatty acids having 2 to 50 carbon atoms, particularly 5 to 30 carbon atoms. The alkanolamine may be an alkanol with 1 to 3 amino groups and 1 to 5 hydroxyl groups, having 2 to 50, particularly 5 to 30 carbon atoms.

The polyol may be, for example, a dihydric to pentahydric alcohol having 10 to 30 carbon atoms.

The amine oxide may be an oxide (for example, having 5 to 50 carbon atoms) of an amine (secondary amine or preferably tertiary amine).

The nonionic dispersant is preferably a nonionic dispersant having an oxyalkylene group (preferably a polyoxyethylene group). The alkylene group in the oxyalkylene group preferably has 2 to 10 carbon atoms. The number of oxyalkylene groups in the molecule of the nonionic dispersant is generally preferably 2 to 100.

The nonionic dispersant is selected from the group consisting of an ether, an ester, an ester ether, an alkanolamide, a polyol, or an amine oxide, and is preferably a nonionic dispersant having an oxyalkylene group.

The nonionic dispersant may be, for example, an alkylene oxide adduct of a linear and/or branched aliphatic (saturated and/or unsaturated) group, a polyalkylene glycol ester of a linear and/or branched fatty acid (saturated and/or unsaturated), a sorbitan ester of a linear and/or branched fatty acid (saturated and/or unsaturated), a glycerin ester of a linear and/or branched fatty acid (saturated and/or unsaturated), a polyglycerol ester of a linear and/or branched fatty acid (saturated and/or unsaturated), a sucrose ester of a linear and/or branched fatty acid (saturated and/or unsaturated), a polyoxyethylene (POE)/polyoxypropylene (POP) copolymer (random copolymer or block copolymer), and an alkylene oxide adduct of acetylene glycol. Among them, the nonionic dispersant is preferably a dispersant such that the structures of the alkylene oxide addition moiety and polyalkylene glycol moiety are polyoxyethylene (POE) or polyoxypropylene (POP) or POE/POP copolymer (which may be a random or block copolymer, for example.).

Furthermore, the nonionic dispersant may not include an aromatic group.

The nonionic dispersant may be the compound represented by the formula:

R¹O-(CH₂CH₂O)ₚ-(R²O)_{q}-R³

[wherein R¹ is an alkyl group having 1 to 22 carbon atoms, an alkenyl group or an acyl group, having 2 to 22 carbon atoms,
R² is each independently the same or different and is an alkylene group having 3 or more carbon atoms (for example, 3 to 10),
R³ is a hydrogen atom, an alkyl group having 1 to 22 carbon atoms, or an alkenyl group having 2 to 22 carbon atoms,
p is a numeral of 2 or more,
q is 0 or a numeral of 1 or more.].

R¹ preferably has 8 to 20 carbon atoms, particularly 10 to 18 carbon atoms. Preferred examples of R¹ include an octyl group, a nonyl group, a trimethylnonyl group, a lauryl group, a tridecyl group, an oleyl group and a stearyl group.

R² is, for example, a propylene group and a butylene group.

In the nonionic dispersant, for example, p may be a numeral of 3 or more (for example, 5 to 200) and q may be a numeral of 2 or more (for example, 5 to 200). Namely, -(R²O)_{q}- may form, for example, a polyoxyalkylene chain.

The nonionic dispersant may be, for example, a polyoxyethylene alkylene alkyl ether comprising a hydrophilic polyoxyethylene chain and a hydrophobic oxyalkylene chain (particularly a polyoxyalkylene chain) in the center. The hydrophobic oxyalkylene chain includes, for example, an oxypropylene chain, an oxybutylene chain, and a styrene chain. The oxypropylene chain is preferred among them.

Specific examples of the nonionic dispersants include a condensation product of ethylene oxide with hexylphenol, isooctatylphenol, hexadecanol, oleic acid, an alkane(C₁₂-C₁₆)thiol, a sorbitan monofatty acid (C₇-C₁₉), an alkyl(C₁₂-C₁₈)amine, or the like, and a sorbitan fatty acid ester, a glycerin fatty acid ester, a polyglycerin fatty acid ester, a sucrose fatty acid ester, a propylene glycol fatty acid ester, a polyoxyethylene alkyl ether, a polyoxyethylene polyoxypropylene alkyl ether, a polyoxyethylene glycerin fatty acid ester, a polyoxyethylene sorbitan fatty acid ester, and a lecithin derivative. Examples of nonionic dispersants include polyoxyethylene alkyl ether, polyoxyethylene polyoxypropylene alkyl ether, polyoxyethylene polyoxybutylene alkyl ether, polyoxyethylene polyoxypropylene glycol and polyethyleneimine ethoxylate.

The proportion of the polyoxyethylene block can be 5 to 80% by weight, for example, 30 to 75% by weight, particularly 40 to 70% by weight, based on a molecular weight of the nonionic dispersant (copolymer).

The average molecular weight of the nonionic dispersant is generally 300 to 5,000, for example, 500 to 3,000.

For example, the nonionic dispersant may be used singly or in admixture of two or more. The nonionic dispersant may be a mixture of a compound with an HLB (hydrophilic-hydrophobic balance) of less than 15 (particularly 5 or less) and a compound with an HLB of 15 or more. More specifically, it is preferable to select the nonionic dispersant from polyoxyethylene alkyl ether, polyoxyethylene polyoxypropylene alkyl ether, polyoxyethylene and polyoxypropylene having an HLB of 1 to 18, sorbitan fatty acid ester, glycerol fatty acid ester, polyglycerol fatty acid ester, sucrose fatty acid ester, propylene glycol fatty acid ester, polyoxyethylene glycerol fatty acid ester and polyoxyethylene sorbitan fatty acid ester having an HLB of less than 7.

### [Cationic dispersant]

The dispersant may comprise a cationic dispersant. The cationic dispersant may be a cationic surfactant. The cationic dispersant may be a compound not having an amide group.

The cationic dispersant may be of low molecular weight (with a molecular weight of 2,000 or less, in particular, 10,000 or less) or of high molecular weight (with a molecular weight of, for example, 2,000 or more). The cationic dispersant may not have an amide group. The cationic dispersant may have a molecular weight of 100 or more, 500 or more, 1,000 or more, 2,000 or more, 4,000 or more, or 6,000 or more, and 1,000,000 or less, 750,000 or less, 500,000 or less, 250,000 or less, 100,000 or less, 25,000 or less, 50,000 or less, 10,000 or less, 7,500 or less, 5,000 or less, 2,500 or less, 750 or less, or 250 or less.

The cationic dispersant may be aliphatic or aromatic, and examples thereof include an ammonium salt (e.g., quaternary ammonium salt). The cationic dispersant may be oxyethylene-added ammonium salt. Specific examples thereof include an amine salt dispersant such as alkylamine salt, an amino alcohol fatty acid derivative, a polyamine fatty acid derivative and imidazoline; a quaternary ammonium salt dispersant such as alkyl trimethyl ammonium salt, dialkyl dimethyl ammonium salt, alkyl dimethyl benzyl ammonium salt, pyridinium salt, alkyl isoquinolinium salt, benzalkonium chloride and benzethonium chloride; and a polymer cationic dispersant such as polyquaternium-1 to 47. Examples of cationic dispersants include alkyl amine salt and quaternary ammonium salt.

The low molecular weight cationic dispersant may be a compound represented by the formula:

R²¹-N⁺(-R²²)(-R²³)(-R²⁴)X-

wherein R²¹, R²², R²³ and R²⁴ are a hydrogen or a hydrocarbon group having 1 to 40 carbon atoms, and
X is an anionic group. Specific examples of R²¹, R²², R²³ and -R²⁴ include an alkyl group (e.g., a methyl group, a butyl group, a stearyl group, a palmityl group) and an aromatic group (e.g., a benzyl group, phenyl group). Specific examples of X include a halogen (e.g., chlorine) and an acid (e.g., hydrochloric acid and acetic acid). The cationic dispersant may be monoalkyltrimethylammonium salt (in which alkyl has 4 to 40 carbon atoms) and benzalkonium chloride.

More specifically, the low molecular weight cationic dispersant may be an ammonium salt represented by the formula:

R¹ₚ-N⁺-R²X-

[wherein R¹ is a C12 or higher (e.g., C₁₂ to C₅₀) linear and/or branched aliphatic (saturated and/or unsaturated) group,
R² is H or a C1 to 4 alkyl group, a benzyl group, a polyoxyethylene group (in which the number of oxyethylene groups is for example, 1 (in particular 2, and especially 3) to 50) (particularly preferably CH₃, C₂H₅),
X is a halogen atom (e.g., chlorine) or a C₁ to C₄ fatty acid salt or a C₁ to C₄ sulfonate,
p is 1 or 2, q is 2 or 3 and p + q = 4.]
R¹ may have 12 to 50, and for example 12 to 30 carbon atoms.

Examples of the low molecular weight cationic dispersants may include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethylammonium chloride, methyldodecyl di(hydropolyoxyethylene) ammonium chloride, benzyldodecyl di(hydropolyoxyethylene) ammonium chloride, and N-[2-(diethylamino)ethyl]oleamide hydrochloride.

The high molecular weight cationic dispersant may be a polymer having a cationic group (for example, an ammonium group, a quaternary ammonium group) (for example, polyquaternium-1 to 47). Examples of high molecular weight cationic dispersants include a cationic natural product (in particular, cationic sugar) such as cationic starch, cationic cellulose (e.g., O-(2-hydroxy-3-(trimethylammonio)propylhydroxyethyl cellulose chloride), cationic guar gum, cationic xanthan gum and chitosan; a polymer of a cationic group-containing monomer such as aziridine, vinyl imidazole, aminoalkyl methacrylate, N,N,N',N'-tetramethyl-2-butene-1,4-diamine, quaternary dimethyl ammonium ethyl methacrylic acid, diallyldimethylammonium chloride, dimethylaminopropylamine and quaternary vinyl imidazole.

### [Anionic dispersant]

The dispersant may comprise an anionic dispersant. The anionic dispersant may be an anionic surfactant. The dispersant may not include an anionic dispersant.

The anionic dispersant may be of low molecular weight (for example, with a molecular weight of 2,000 or less, particularly 10,000 or less), or may be of high molecular weight (for example, with a molecular weight of 2,000 or more). The anionic dispersant may have a molecular weight of 100 or more, 500 or more, 1,000 or more, 2,000 or more, 4,000 or more, or 6,000 or more, and may be 1,000,000 or less, 750,000 or less, 500,000 or less, 250,000 or less, 100,000 or less, 50,000 or less, 25000 or less, 10,000 or less, 7,500 or less, 5,000 or less, 2,500 or less, 750 or less, or 250 or less.

Examples of the anionic dispersant include an alkyl ether sulfate, an alkyl sulfate, an alkenyl ether sulfate, an alkenyl sulfate, an olefin sulfonate, an alkanesulfonate, a saturated or unsaturated fatty acid salt, an alkyl or alkenyl ether carbonate, an α-sulfone fatty acid salt, a N-acylamino acid dispersant, a phosphate mono- or diester dispersant, and a sulfosuccinic acid ester. Examples of anionic dispersants include a carboxylic acid salt (e.g., fatty acid salt).

### [Amphoteric dispersant]

The dispersant may comprise an amphoteric dispersant. The amphoteric dispersant may be an amphoteric surfactant.

The amphoteric dispersant may be of low molecular weight (for example, with a molecular weight of 2,000 or less, particularly 10,000 or less), or may be of high molecular weight (for example, with a molecular weight of 2,000 or more). The amphoteric dispersant may have a molecular weight of 100 or more, 500 or more, 1,000 or more, 2,000 or more, 4,000 or more, or 6,000 or more, and may be 1,000,000 or less, 750,000 or less, 500,000 or less, 250,000 or less, 100,000 or less, 50,000 or less, 25,000 or less, 10,000 or less, 7,500 or less, 5,000 or less, 2,500 or less, 750 or less, or 250 or less.

Examples of the amphoteric dispersants include, for example, alanines, imidazolinium betaines, amidobetaines, and acetic acid betaine, and specific examples of the amphoteric dispersants include, for example, lauryl betaine, stearyl betaine, lauryl carboxymethyl hydroxyethyl imidazolinium betaine, lauryl dimethylamino acetic acid betaine, and fatty acid amidopropyldimethylaminoacetic acid betaine.

### [Inorganic dispersant]

The dispersant may comprise an inorganic dispersant.

The inorganic dispersant may have an average primary particle size of 5 nm or larger, 30 nm or larger, 100 nm or larger, 1 µm or larger, 10 µm or larger, or 25 µm or larger, and 100 µm or smaller, 50 µm or smaller, 10 µm or smaller, 1 µm or smaller, 500 nm or smaller, or 300 nm or smaller. The average primary particle size may be measured by a microscope, for example, a scanning electron microscope or a transmission electron microscope. The inorganic dispersant may be hydrophilic particles.

Examples of inorganic dispersants include polyvalent metal phosphate such as tricalcium phosphate, magnesium phosphate, aluminum phosphate, zinc phosphate and hydroxyapatite; carbonate such as calcium carbonate and magnesium carbonate; silicate such as calcium metasilicate; sulfate such as calcium sulfate and barium sulfate; and hydroxide such as calcium hydroxide, magnesium hydroxide and aluminum hydroxide.

### [Amount of Dispersant]

The amount of dispersant may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the wax, and may be 500 parts by weight or less, 300 parts by weight or less, 200 parts by weight or less, 100 parts by weight or less, 30 parts by weight or less, 20 parts by weight or less, 10 parts by weight or less, 5 parts by weight or less, 3 parts by weight or less, or 1 part by weight or less.

### {Liquid medium}

The repellent in the present disclosure may comprise a liquid medium. The liquid medium may be water, an organic solvent, or a mixture of water and an organic solvent. The repellent may be a dispersion or a solution. The repellent in the present disclosure is preferably an aqueous dispersion.

Examples of the organic solvents include esters (for example, esters having 2 to 40 carbon atoms, specifically ethyl acetate and butyl acetate), ketones (for example, ketones having 2 to 40 carbon atoms, specifically methyl ethyl ketone and diisobutyl ketone), alcohols (for example, alcohols having 1 to 40 carbon atoms, specifically isopropyl alcohol), aromatic solvents (for example, toluene and xylene), petroleum-based solvents (for example, alkanes having 5 to 10 carbon atoms, specifically, naphtha and kerosene). The organic solvent is preferably a water-soluble organic solvent. The water-soluble organic solvent may include a compound having at least one hydroxy group (for example, polyol such as alcohol and glycol solvent, and an ether form of polyol (for example, a monoether form)). These may be used alone, or two or more of them may be used in combination.

### [Amount of liquid medium]

The amount of liquid medium may be 1 part by weight or more, 3 parts by weight or more, 5 parts by weight or more, 10 parts by weight or more, 20 parts by weight or more, 30 parts by weight or more, 40 parts by weight or more, or 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the wax.

The amount of water may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less based on 1 part by weight of the wax.

The amount of the organic solvent may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the wax.

### {Silicone}

The repellent in the present disclosure may include silicone (polyorganosiloxane). Containing the silicone enables providing favorable texture and durability in addition to favorable liquid-repellency.

As the silicone, a known silicone can be used, and examples of the silicone include a polydimethylsiloxane and modified silicones (for example, amino-modified silicone, epoxy-modified silicone, carboxy-modified silicone, and methylhydrogen silicone). For example, the silicone may be silicone wax having waxy properties. These may be used singly or in combination of two or more thereof.

A weight average molecular weight of the silicone may be 1,000 or more, 10,000 or more, or 50,000 or more, and may be 2,500,000 or less, 1,000,000 or less, 500,000 or less, 250,000 or less, 100,000 or less, or 50,000 or less.

### [Amount of Silicone]

The amount of silicone may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the wax, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less.

### {Organic Acid}

The repellent of the present disclosure may contain an organic acid. As the organic acid, a known organic acid can be used. Examples of the organic acid preferably include, for example, a carboxylic acid, a sulfonic acid, and a sulfinic acid, with the carboxylic acid being particularly preferred. Examples of the carboxylic acid include, for example, formic acid, acetic acid, propionic acid, butyric acid, oxalic acid, succinic acid, glutaric acid, adipic acid, malic acid, and citric acid, with the formic acid or acetic acid being particularly preferred. In the present disclosure, one type of organic acid may be used, or two or more thereof may be combined for use. For example, formic acid and acetic acid may be combined for use.

### [Amount of Organic Acid]

The amount of organic acid may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the wax, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less. The amount of organic acid may be adjusted so that a pH of the repellent is 3 to 10, for example 5 to 9, particularly 6 to 8. For example, the repellent may be acidic (pH of 7 or less, for example 6 or less).

### {Inorganic acid}

The repellent in the present disclosure may comprise an inorganic acid. As the inorganic acid, a known inorganic acid can be used. Examples of inorganic acids include hydrogen chloride, hydrogen bromide, hydrogen iodide, nitric acid, boric acid, sulfuric acid and phosphoric acid. In the present disclosure, one inorganic acid may be used, or two or more of them may be used in combination. The addition of inorganic acid can improve the stability of the aqueous dispersion.

### [Amount of inorganic acid]

The amount of the inorganic acid may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less based on 100 parts by weight of the wax. The amount of the inorganic acid may be adjusted so that the repellent has a pH of 3 to 10, for example, 5 to 9, and in particular, 6 to 8. The repellent may be acidic (may have a pH of 7 or less, for example, 6 or less).

### {Curing Agent}

The repellent of the present disclosure may contain a curing agent (active hydrogen-reactive compound or active hydrogen-containing compound). When the repellent is for paper use (for example, an oil-resistant agent for paper), the repellent may be free from a curing agent.

### {Other Component}

The repellent may contain a component other than the aforementioned components. Examples of the other components include, for example, polysaccharides, an agglomerating agent, a yield improver, a coagulant, a binder resin, an anti-slip agent, a sizing agent, a paper strengthening agent, a filler, an antistatic agent, an antiseptic agent, an ultraviolet absorber, an antibacterial agent, a deodorant, and a fragrance. These may be used singly or in combination of two or more thereof.

In addition to the above components, as other components, for example, other water-repellent and/or oil-repellent agents, a dispersant, a texture modifier, a softening agent, a flame retarder, a coating material fixing agent, a wrinkle-resistant agent, a drying rate adjuster, a cross-linking agent, a film formation agent, a compatibilizer, an antifreezing agent, a viscosity adjuster, an ultraviolet absorber, an antioxidant, a pH adjuster, an insect repellent, an antifoaming agent, an anti-shrinkage agent, a laundry wrinkle-resistant agent, a shape retention agent, a drape retention agent, an ironing improving agent, a brightening agent, a whitening agent, fabric softening clay, a migration-proofing agent such as a polyvinylpyrrolidone, a polymer dispersant, a soil release agent, a scum dispersant, a fluorescent brightening agent such as 4,4-bis(2-sulfostyryl)biphenyldisodium (Tinopal CBS-X manufactured by Ciba Specialty Chemicals Plc), a dye fixing agent, an anti-color fading agent such as 1,4-bis(3-aminopropyl)piperazine, a stain removing agent, enzymes such as cellulase, amylase, protease, lipase, and keratinase as fiber surface modifiers, a foam inhibitor, and silk protein powder that can impart texture and functions of silk such as moisture absorption and release properties, and surface modified products or emulsified dispersions thereof (for example, K-50, K-30, K-10, A-705, S-702, L-710, FP series (Idemitsu Petrochemical Co., Ltd.), hydrolyzed silk liquid (Jomo), SILKGEN G Soluble S (ICHIMARU PHARCOS Co., Ltd.)), an antifouling agent (for example, a nonionic polymer compound composed of an alkylene terephthalate and/or an alkylene isophthalate units and a polyoxyalkylene unit (for example, FR627 manufactured by GOO CHEMICAL CO., LTD.), SRC-1 manufactured by Clariant (Japan), K. K.), can be compounded. These may be used singly or in combination of two or more thereof. The components may be appropriately selected depending on the use of the repellent.

### [Amount of Other Component]

Each amount or the total amount of other components may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the wax, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less.

### <Pulp composition>

The pulp composition of the present disclosure comprises a wax and a pulp substrate. The pulp composition of the present disclosure can exhibit excellent oil resistance.

The pulp composition of the present disclosure is obtained by adding a wax to a pulp substrate. The pulp composition may also be obtained by treating a pulp substrate with a repellent containing a wax. In that case the amount of the repellent added and the composition of the repellent may be adjusted so that the respective components are in desired amounts. The components in the repellent may also be separately added to the pulp composition as an additive.

The pulp composition of the present disclosure may not have any one selected from the group consisting of a compound having a fluoroalkyl group having 8 or more carbon atoms, a compound having a perfluoroalkyl group having 8 or more carbon atoms, a compound having a fluoroalkyl group having 4 or more carbon atoms, a compound having a perfluoroalkyl group having 4 or more carbon atoms, a compound having a perfluoroalkyl group, a compound having a fluoroalkyl group, and a compound having a fluorine atom. The pulp composition of the present disclosure can impart liquid-repellency to a substrate without including these fluorine-containing compounds.

The pulp composition may have a pH of 3 to 10, for example, 5 to 9, and in particular 6 to 8. The amount of the respective components may be adjusted to achieve such pH.

### {Pulp substrate}

The pulp composition comprises a pulp substrate. The pulp substrate is composed of pulp, and the pulp may be wood pulp, non-wood pulp, waste-paper pulp, or the like.

### [Wood pulp]

Wood pulp includes softwood kraft pulp from the genus Abies, Pinus and the like, and hardwood kraft pulp from the genus Acacia, Eucalyptus, Fagus, and Populus (e.g., poplar). Softwood kraft pulp includes, for example, unbleached softwood kraft pulp (NUKP), bleached softwood pulp (NBKP), semi-bleached softwood kraft pulp (NSBKP), and softwood sulfite pulp. Examples of hardwood kraft pulp include unbleached hardwood kraft pulp (LUKP), bleached hardwood kraft pulp (LBKP), semi-bleached hardwood kraft pulp (LSBKP), and hardwood sulfite pulp. The pulp may be used singly or in combination.

Other than kraft pulp, in addition to softwood kraft pulp and hardwood kraft pulp, wood pulp includes stone ground pulp (SGP), pressurized stone ground pulp (PGW), refiner ground pulp (RGP), thermo-ground pulp (TGP), chemi-ground pulp (CGP), crushed wood pulp (GP), thermomechanical pulp (TMP), and other mechanical pulps. Furthermore, wastepaper pulp includes a disintegrated wastepaper pulp, a disintegrated and deinked wastepaper pulp or a disintegrated, deinked and bleached wastepaper pulp produced from brown waste paper, kraft envelope wastepaper, wastepaper of magazines, wastepaper of newspapers, wastepaper of flyers, sorted office paper, wastepaper of cardboard, hard white wastepaper, Kent wastepaper, wastepaper of poster paper and bond paper.

### [Non-wood pulp]

Examples of non-wood pulp include pulp prepared from bagass, kenaf, bamboo, linter, cotton, linen, hemp, ramie, straw, esparto, Manila hemp, Xyzal hemp, yellow hemp, flax, ganpi, paper bush and kozo (Japanese paper mulberry), and bagass, kenaf, bamboo and linter are preferred, and bagass is more preferred.

### [Fiber length of pulp]

The pulp has an average fiber length of preferably 0.1 mm or more, more preferably 0.3 mm or more and further preferably 0.5 mm or more from the viewpoint of the improvement in oil resistance, and preferably 5.0 mm or less, more preferably 4.0 mm or less, further preferably 3.0 mm or less, particularly preferably 2.0 mm or less, and most preferably 1.2 mm or less from the viewpoint of ease of manufacture.

### [Fiber width of pulp]

From the viewpoint of the improvement in oil resistance, the pulp has an average fiber width of preferably 5 µm or more, more preferably 10 µm or more, and further preferably 15 µm or more, and preferably 50 µm or less, more preferably 40 µm or less, and further preferably 30 µm or less.

### [Form of pulp substrate]

The form of the pulp substrate when the wax is added thereto may be, for example, pulp alone, pulp slurry, or a pulp product. Specific examples thereof include pulp, such as bleached or unbleached chemical pulp such as kraft pulp or sulfite pulp; bleached or unbleached high-yield pulp such as groundwood pulp, mechanical pulp, or thermomechanical pulp; pulp slurry including the above pulp; and a pulp product such as paper, a paper container and a pulp formed article.

### [Amount of pulp substrate]

The amount of pulp substrate may be 0.1% by weight or more, 0.5% by weight or more, 1% by weight or more, 3% by weight or more, 5% by weight or more, 10% by weight or more, 20% by weight or more, 30% by weight or more, 50% by weight or more, 75% by weight or more, or 90% by weight or more, and 99% by weight or less, 75% by weight or less, 50% by weight or less, 40% by weight or less, 30% by weight or less, 20% by weight or less, 10% by weight or less, 5% by weight or less, 4% by weight or less, or 3% by weight or less in the pulp composition. When the pulp composition is prepared by internal addition, the amount of pulp substrate may be 30% by weight or less in the pulp composition; when the pulp composition is prepared by external addition, the amount of pulp substrate may be 75% by weight or more in the pulp composition.

The amount of the pulp substrate may be 50% by weight or more, 60% by weight or more, 70% by weight or more, 80% by weight or more, 90% by weight or more, 95% by weight or more, or 99% by weight or more, and 99.9% by weight or less, 95% by weight or less, 90% by weight or less, 85% by weight or less, 75% by weight or less, 65% by weight or less, or 55% by weight or less in the pulp composition excluding liquid medium.

### {Liquid medium}

The pulp composition may comprise a liquid medium. The liquid medium may be water, an organic solvent, or a mixture of water and an organic solvent. The liquid medium is typically an aqueous medium, and in particular, water. The liquid medium may comprise a liquid medium derived from repellent.

### [Amount of liquid medium]

The amount of the liquid medium may be 0.1% by weight or more, 0.5% by weight or more, 1% by weight or more, 3% by weight or more, 5% by weight or more, 10% by weight or more, 20% by weight or more, 30% by weight or more, 50% by weight or more, 75% by weight or more, 90% by weight or more, or 95% by weight or more, and 99% by weight or less, 75% by weight or less, 50% by weight or less, 40% by weight or less, 30% by weight or less, 20% by weight or less, 10% by weight or less, 5% by weight or less, 4% by weight or less, or 3% by weight or less in the pulp composition. Typically, when the pulp composition is prepared by internal addition, the amount of the liquid medium is 50% by weight or more, and in particular 90% by weight or more in the pulp composition; when the pulp composition is prepared by external addition, the amount of the liquid medium is 30% by weight or less, and in particular, 10% by weight or less in the pulp composition.

### {Wax}

The pulp composition comprises a wax, in particular hydrocarbon wax. Details of the types of the wax are the same as those of the wax in <Repellent>.

### [Amount of wax]

The amount of the wax may be 0.1% by weight or more, 0.3% by weight or more, 0.5% by weight or more, 0.75% by weight or more, 1.0% by weight or more, 2.0% by weight or more, or 3.0% by weight or more, and is preferably 0.5% by weight or more, and may be 25% by weight or less, 20% by weight or less, 15% by weight or less, 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, and is for example 15% by weight or less, 5.0% by weight or less, or 3.0% by weight or less based on the pulp substrate.

The surface of the pulp substrate (for example, a pulp product such as paper, a paper container and a pulp formed article) may be externally treated with the wax. The amount of the wax included in the coating layer formed by the external addition treatment may be 0.01 g/m² or more, 0.03 g/m² or more, 0.05 g/m² or more, 0.1 g/m² or more, 0.3 g/m² or more, 0.5 g/m² or more, or 1.0 g/m² or more, and 5.0 g/m² or less, 4.0 g/m² or less, 3.0 g/m² or less, 2.0 g/m² or less, 1.0 g/m² or less, 0.5 g/m² or less, 0.3 g/m² or less, or 0.1 g/m² or less.

### {Dispersant}

The pulp composition may comprise a dispersant. Details of the types of the dispersant are the same as those of the dispersant in <Repellent>.

### [Amount of dispersant]

The amount of the dispersant may be 0.1% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, and is preferably 5.0% by weight or less, and more preferably 3.0% by weight or less based on the pulp substrate.

### {Paper strength agent}

The pulp composition may comprise a paper strength agent. Examples of paper strength agents include:
a polyacrylamide-based paper strength agent such as cationic polyacrylamide, anionic polyacrylamide and amphoteric polyacrylamide;
a polysaccharide-based paper strength agent such as starch, enzyme modified starch, thermochemically modified starch, oxidized starch, esterified starch, etherified starch (e.g., hydroxyethylated starch), aldehyde starch, cationized starch, starch, xanthan gum, gum karaya, welan gum, guar gum, pectin, tamarind gum, carrageenan, chitosan, gum arabic, locust bean gum, cellulose, alginic acid, agar, dextran, cellulose, carboxymethylcellulose, hydroxyethylcellulose, hydroxypropylcellulose, chitin nanofiber, cellulose nanofiber and pullulan, and a modified polysaccharide thereof (e.g., a modified polysaccharide prepared by introducing a hydroxyl group or a cationic group thereinto);
a polyamide-based paper strength agent such as polyamide resin, polyamine resin, polyamide-polyamine resin, polyamide-epichlorohydrin resin, polyamide-polyamine-epichlorohydrin resin, polyamide-polyurea-formaldehyde resin and epoxidized polyamide resin;
a urea/melamine paper strength agent such as urea resin, melamine resin, urea-formaldehyde resin and melamine-formaldehyde resin;
a polyvinyl alcohol paper strength agent such as polyvinyl alcohol, completely saponified polyvinyl alcohol, partially saponified polyvinyl alcohol, carboxyl modified polyvinyl alcohol, silanol modified polyvinyl alcohol, cation modified polyvinyl alcohol and terminal alkyl modified polyvinyl alcohol; and
a styrene butadiene copolymer, polyvinyl acetate, a vinyl chloride-vinyl acetate copolymer, polyvinyl chloride, polyvinylidene chloride, polyacrylic ester, fatty acid diamide, polyethyleneimine resin and ketone aldehyde resin.

A polyacrylamide-based paper strength agent, a polysaccharide-based paper strength agent and a polyamide-based paper strength agent are preferred as the paper strength agent in the present disclosure.

### [Amount of paper strength agent]

The amount of the paper strength agent may be 0.1% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, and is preferably 5.0% by weight or less based on the pulp.

### {Sizing agent}

The pulp composition may comprise a sizing agent. Examples of sizing agents include a cationic sizing agent, an anionic sizing agent, a neutral sizing agent and an amphoteric sizing agent, a rosin-based sizing agent (for example, an acidic rosin-based sizing agent and a neutral rosin-based sizing agent), alkyl ketene dimer and alkenyl succinic anhydride.

### [Amount of sizing agent]

The amount of the sizing agent may be 0.1% by weight or more, 0.2% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less based on the pulp.

### {Other additives}

The pulp composition may also include another additive used for producing a pulp product in addition to the above components, including a known combination chemical for paper such as a fixing agent (e.g., aluminum sulfate), a coagulant and an agglomerating agent (e.g., polyamine-based resin), an yield improver (e.g., polyacrylamide-based resin), an organic acid (e.g., formic acid, acetic acid), a dye, a slime control agent, and an antifoaming agent.

### [Amount of other additives]

The amount of other additives may be 0.01% by weight or more, 0.1% by weight or more, 1% by weight or more, 3% by weight or more, 5% by weight or more, and 30% by weight or less, 20% by weight or less, 10% by weight or less, 5% by weight or less, 3% by weight or less, or 1% by weight or less, respectively, based on the pulp substrate.

### <Method for producing products>

The method for producing a product of the present disclosure may comprise treating a substrate using the repellent of the present disclosure as a treatment agent.

The substrate treated with the treatment agent in the present disclosure is not limited, and is preferably a fiber substrate, and may be, particularly a textile substrate (fabric substrate), or a pulp substrate (paper substrate), and is particularly a pulp substrate.

Examples of the fiber substrate include animal and vegetable-derived natural fibers such as cotton, hemp, wool, and silk; synthetic fibers such as polyamide, polyester, polyvinyl alcohol, polyacrylonitrile, polyvinyl chloride, and polypropylene; semi-synthetic fibers such as rayon and acetate; inorganic fibers such as glass fiber, carbon fiber, and asbestos fiber; and mixed fibers thereof. Textile products include woven fabrics, knitted fabrics, nonwoven fabrics, cloths in garment form (e.g., water-repellent clothing such as raincoats), and carpets, and fibers, yarns, and intermediate fiber products (e.g., slivers or rovings, etc.) in a state prior to being made into cloth may also be subjected to treatment.

The substrate treated with the treatment agent of the present disclosure is not limited to fiber substrates, and may also include stone, filters (e.g., electrostatic filters), dust masks, fuel cell components (e.g., gas diffusion electrodes and gas diffusion supports), glass, wood, leather, fur, asbestos, bricks, cement, metals and oxides, ceramic products, plastics, coated surfaces, plaster, and the like.

When the substrate is glass, the glass product to be produced may be an optical member. A layer (or film), such as a hard coat layer or an antireflection layer, may be formed on the surface (outermost layer) of the glass substrate. Either a single-layer antireflection layer or a multilayer antireflection layer may be used as the antireflection layer. Examples of inorganic materials usable for the antireflection layer include SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, and WO₃. These inorganic materials may be used alone or in combination of two or more (for example, as a mixture). When a multilayer antireflection layer is used, SiO₂ and/or SiO is preferably used for the outermost layer. When the article produced is an optical glass component for touch panels, a thin film of a transparent electrode, such as indium tin oxide (ITO) or indium zinc oxide, may be provided on part of the surface of the substrate (glass). In addition, the substrate may have an insulating layer, an adhesive layer, a protective layer, a decorative frame layer (I-CON), an anti-fog film layer, a hard coat film layer, a polarizing film, a retardation film, and a liquid crystal display module, depending on the specifications.

### {Method for producing pulp product}

The pulp product (paper product) in the present disclosure can be prepared by subjecting a pulp composition obtained by treating a pulp substrate with a repellent comprising a wax to processing such as drying, heating and forming according to need.

The repellent in the present disclosure can be applied to a pulp substrate as a treatment agent (particularly a surface-treating agent) by a conventionally known method. The treatment method may be a method for dispersing the repellent in the present disclosure in an organic solvent or water, if necessary, to dilute it and allowing it to adhere to an inside of a pulp substrate and/or on a surface thereof and drying by a known method such as dip coating, spray coating, and foam coating. The dilution factor, which may be changed depending on the concentration and the purpose of use of the repellent, may be 3 to 2,000 times, and for example, 10 to 100 times. After drying, a pulp product to which a solid component of the repellent has been adhered, is obtained. If necessary, the repellent of the present disclosure may be applied in combination with a suitable cross-linking agent, and curing may be carried out.

The repellent can be applied to a pulp substrate by any of methods known for treating a pulp substrate with liquid. The pulp substrate may be immersed in the repellent, the pulp substrate and the repellent may be mixed, or solution may be adhered or sprayed onto the pulp substrate. The treated pulp substrate is preferably dried and cured by heating in order to develop liquid-repellency. The heating temperature may be, for example, 100°C to 200°C, 100°C to 170°C, or 100°C to 120°C. In the present disclosure, the heating time may be 5 seconds to 60 minutes, for example, 30 seconds to 3 minutes.

As the method for treating a pulp substrate, an internal addition treatment method in which repellent is added to a pulp substrate before papermaking (e.g., in the form of pulp slurry), or an external addition treatment method in which repellent is applied to a pulp substrate after papermaking (e.g., a pulp product), can be employed. Examples of internal addition treatment methods include mixing and dipping, and the internal addition treatment method may include a step of adding a repellent to pulp slurry and mixing it with stirring. Examples of external addition treatment methods include spraying, coating, dipping and foam coating and more specifically a pound-type two-roll size press, a gate roll type size press and a rod metering type size press. The treatment may be external addition treatment or internal addition treatment. For example, when the pulp substrate is paper, the repellent may be applied to paper, or solution may be adhered or sprayed onto paper, or the repellent may be mixed with pulp slurry before papermaking to perform treatment. When the pulp substrate is a fiber material, examples of treatment methods include padding treatment, dip treatment, spray treatment, and coating treatment. Examples of padding treatment include the method involving using the padding apparatus as described on pages 396 to 397 of Seni Sensyoku Kako Jiten (in Japanese; Fiber-dyeing process dictionary) (published by THE NIKKAN KOGYO SHIMBUN, LTD., 1963) and pages 256 to 260 of Irozome Kagaku (in Japanese; dyeing chemistry) III (published by Jikkyo Shuppan Co., Ltd., 1975). Examples of the coating treatment include the method involving using a coating machine as described on pages 473 to 477 of Sensyoku Shiage Kiki Soran (in Japanese; Comprehensive guide to dyeing and finishing machines) (published by Fiber Japan CO., LTD., 1981). Examples of the dip treatment include the method involving using a batch type dyeing machine as described on pages 196 to 247 of Sensyoku Shiage Kiki Soran (in Japanese; Comprehensive guide to dyeing and finishing machines) (published by Fiber Japan CO., LTD., 1981), and for example, a jet dyeing machine, air flow dyeing machine, drum dyeing machine, wince dyeing machine, washer dyeing machine, and cheese dyeing machine can be used. Examples of the spray treatment include a method involving using an air spray that nebulizes and sprays a treatment liquid by compressed air, or an air spray by hydraulic pressure nebulization system.

The method of treatment may be internal addition treatment in which a repellent is added to pulp slurry before papermaking. The internal addition treatment may include, but is not limited to, one or more of a step of adding the repellent to pulp slurry and mixing it with stirring; a step of sucking and dehydrating the pulp composition prepared in the step through a net-like body of predetermined shape and depositing the pulp composition then to form a pulp formed article intermediate; and a step of molding and drying the pulp formed article intermediate by using a heated molding mold to obtain a pulp formed article. After having been lightly dried at room temperature or elevated temperature, the treated paper may be optionally subjected to heat treatment, depending on the nature of the paper. The temperature of the heat treatment may be 150°C or higher, 180°C or higher, or 210°C or higher, and may be 300°C or lower, 250°C or lower, or 200°C or lower, particularly 80°C to 180°C. Carrying out the heat treatment in such a temperature range enables exhibiting, for example, excellent oil resistance. The pulp substrate which has undergone internal addition treatment may be subjected to external addition treatment to be treated with the repellent, allowing another wax or repellent to be adhered to the surface.

The treatment method may be an external addition treatment in which repellent is applied to a pulp substrate after papermaking. The size press used in external addition treatment may be classified depending on the coating method as follows. One coating method involves supplying a coating liquid (size liquid) to a nip portion formed by passing paper between two rubber rolls, creating a pool of the coating liquid called a pond, and allowing the paper to pass through this pool to coat both sides of the paper with the size liquid, which is a method employed for a so-called pound-type two-roll size press. Another coating method is a method used for a gate roll type size press in which a size liquid is applied by a surface transfer type, and a rod metering type size press. In the pound-type two-roll size press, the size liquid easily penetrates into an inside of paper, and in the surface transfer type, a size liquid component is likely to stay on a surface of the paper. In the surface transfer type, a coating layer is likely to stay on a surface of paper more than in the pound-type two-roll size press, and the amount of coating layer formed on the surface is more than in the pound-type two-roll size press. In the present disclosure, even in the case of using the former pound-type two-roll size press, performance can be imparted to paper. After having been lightly dried at room temperature or elevated temperature, the paper treated in such a manner is arbitrarily accompanied by heat treatment that can have a temperature range of up to 300°C, for example up to 200°C, and particularly the temperature range of 80°C to 180°C, depending on the nature of the paper, as a result of which excellent oil resistance and the like can be exhibited.

Specific examples of the pulp products include, for example, paper, a paper container, a pulp formed article, a food packaging material, a food container, gypsum liner board base paper, coated base paper, medium-quality paper, a general liner and core, neutral pure white roll paper, a neutral liner, a rust-proof liner, and metal pasted paper, kraft paper, neutral printing writing paper, neutral coated base paper, neutral PPC paper, neutral thermal paper, neutral pressure-sensitive base paper, neutral inkjet paper and neutral information paper. Preferred examples of pulp products include a food packaging material and a food container, for example, a pulp product for food contact, and in particular, a pulp formed article for food contact.

Embodiments have been described above, but it will be understood that various modifications can be made to embodiments and details without departing from the spirit and the scope of the claims.

### Examples

Hereinafter, the present disclosure will be described in detail with reference to Examples, but the present disclosure is not limited to these Examples.

The test procedures are as follows.

### [Volume abundance ratio of particle with a size of 10 µm or larger]

The abundance ratio of particles with a size of 10 µm or larger was calculated from the volume-based frequency distribution (volume distribution) obtained by the measurement using the water-dispersible oil-resistant agent using a laser diffraction/scattering apparatus. This value was defined as the volume abundance ratio of particles with a size of 10 µm or larger.

### [Volume abundance ratio of particles with size of 100 µm or larger]

The abundance ratio of particles with a size of 100 µm or larger was calculated from the volume-based frequency distribution (volume distribution) obtained by the measurement using the water-dispersible oil-resistant agent using a laser diffraction/scattering apparatus. This value was defined as the volume abundance ratio of particles with a size of 100 µm or larger.

### [Median diameter D50]

The median diameter D50 of the water-dispersible oil-resistant agent was determined by measurement using a laser diffraction/scattering apparatus.

### [Ionic charge density]

The ionic charge density of the oil-resistant agent of the present disclosure may be measured, for example, by the following method. The anion requirement of a sample solution having a solid content of 0.1 g/L is measured by a particle charge meter (MUTEK PCD-04 manufactured by BTG) using a 1/1,000 N potassium polyvinylsulfonate solution to calculate the ionic charge density (cationic charge density) by the following equation (1). Alternatively, the cation requirement is measured in the same manner by using poly(diallyldimethylammonium chloride) solution instead of the potassium polyvinylsulfonate solution to calculate the ionic charge density (anionic charge density) by the following equation (1). $Ionic charge density \left(μeq/g\right) = A / B$ (1)
A: cation requirement or anion requirement (µeq/L)
B: Concentration of sample solution (g/L)

### [Preparation of pulp mold]

Pulp mold was formed using an automatic mold molding machine. In the lower part thereof, a net-like body was arranged on a pulp mold molding mold made of metal with many suction holes, a metal tank was arranged in the upper part, and a mixture of pulp slurry and the water-dispersible oil-resistant agent was charged in the upper metal tank. From the opposite side of the pulp mold molding mold to the side where the net-like body was arranged, the pulp-containing aqueous composition was suctioned and dehydrated through the pulp mold molding mold and the net-like body by a vacuum pump, and solids (pulp, etc.) contained in the pulp-containing aqueous composition were allowed to deposit on the net-like body to obtain a pulp mold intermediate. Next, the resulting pulp mold intermediate was dried by applying pressure of 0.05 to 5 MPa thereto from the tops and bottoms of male and female molding molds made of metal, which have been heated to 60 to 250°C. Thus, a pulp mold product formed into the shape of a container was produced.

### [Practical oil resistance test at 65°C]

Pretreatment was performed by storing the pulp mold under conditions of 23°C and 50% humidity for 12 hours. After pouring 100 ml of corn oil at 65°C into the pulp mold and allowing it to stand at room temperature for 45 minutes, the corn oil was removed from the pulp mold, and the degree of oil staining in the pulp mold was evaluated. The evaluation scores were set as follows according to the degree of staining.
5: No stains inside the pulp mold.
4: Stains inside the pulp mold. No stains on the backside.
3: Stains the inside the pulp mold. Slight stain bleed out on the backside.
2: Stains inside the pulp mold. The area of stain bleed out to the backside is less than 50% of the total area.
1: Stains inside the pulp mold. The area of stain bleed out to the backside is 50% or more and less than 100% of the total area.
0: Stains over the backside.

### [Differential scanning calorimetry of wax]

The maximum endothermic peak temperature, melting point, crystallization temperature, and glass transition temperature of the wax were determined by differential scanning calorimetry (DSC). The DSC measurement was performed by cooling to -20°C, followed by heating at 10°C/min to 180°C under a nitrogen atmosphere, and measuring the endothermic peak observed during the heating process. When multiple endothermic peaks appeared, the endothermic peak on the highest temperature side was defined as the maximum endothermic peak, and the peak top was defined as the maximum endothermic peak temperature. The maximum endothermic peak temperature corresponds to the melting point of the wax. The endothermic heat was calculated from the heat within ±10°C of the endothermic peak temperature.

### [Temperature-variable X-ray diffraction measurement of wax]

The crystalline state of the wax was measured by X-ray diffraction (XRD) using a SmartLab manufactured by RIGAKU. Cu Kα radiation was used as the light source. The temperature-variable XRD (XRD-DSC) measurement was performed under a nitrogen atmosphere by cooling to - 20°C, then heating to 25°C or 60°C at 5°C/min, holding for 5 minutes, and then performing the measurement.

The full width at half maximum of the peak was defined as the width in 2θ at half of the peak intensity from the baseline to the peak top.

The diffraction intensity ratio [A60°C/A25°C] was calculated as follows.

The intensity of the maximum diffraction peak in the region where 2θ is 15° to 30° at a measurement temperature of 25°C was defined as [peak intensity A25°C]. The intensity of the maximum diffraction peak in the region where 2θ is 15° to 30° at a measurement temperature of 60°C was defined as [peak intensity A60°C]. As shown in the following equation, the diffraction intensity ratio [A60°C/A25°C] was calculated by dividing [peak intensity A60°C] by [peak intensity A25°C]. 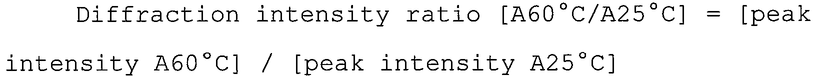 Diffraction intensity ratio [A60°C/A25°C] = [peak intensity A60°C] / [peak intensity A25°C]

### [¹H-NMR spectrum measurement of wax]

In the ¹H-NMR spectrum of the wax, the ratio of an integral value [integral value B] of a signal observed at a chemical shift of 1.05 ppm or more and 1.47 ppm or less to an integral value [integral value A] of a signal observed at a chemical shift of 0.79 ppm or more and 0.93 ppm or less, [integral value B]/[integral value A], was measured by the following method.

The wax was dissolved in deuterated chloroform (containing tetramethylsilane) to prepare a measurement sample. Subsequently, a ¹H-NMR spectrum was measured using a nuclear magnetic resonance spectrometer (JEOL 400 MHz).

The chemical shift reference was set such that the peak of tetramethylsilane (TMS) was 0 ppm in the measured spectrum. The phase was adjusted by performing first-order phase correction in the region of the chemical shift of TMS and second-order phase correction in the region of the chemical shift of deuterated chloroform to adjust signal flatness.

The integral value of the signal in a chemical shift range of 0.79 ppm or more and 0.93 ppm or less was calculated, and this integral value was set to 6 and defined as [integral value A]. Next, the integral value of the signal observed in a chemical shift range of 1.05 ppm or more and 1.47 ppm or less was calculated and defined as [integral value B]. The ratio of the integral values [integral value B]/[integral value A] was calculated by dividing [integral value B] by [integral value A].

### [Differential scanning calorimetry of solid component obtained by removing liquid medium from oil-resistant agent]

The maximum endothermic peak temperature, melting point, crystallization temperature, and glass transition temperature of the solid component obtained by removing the liquid medium from the oil-resistant agent were determined by differential scanning calorimetry (DSC). The liquid medium was removed from the oil-resistant agent by natural drying at room temperature, followed by drying under reduced pressure for 24 hours.

The DSC measurement was performed by cooling to - 20°C, followed by heating at 10°C/min to 180°C under a nitrogen atmosphere, and measuring the endothermic peak observed during the heating process. When multiple endothermic peaks appeared, the endothermic peak on the highest temperature side was defined as the maximum endothermic peak, and the peak top was defined as the maximum endothermic peak temperature. The endothermic heat was calculated from the heat within ±10°C of the endothermic peak temperature.

### [Temperature-variable X-ray diffraction measurement of solid component obtained by removing liquid medium from oil-resistant agent]

The crystalline state of the solid component obtained by removing the liquid medium from the oil-resistant agent was measured by X-ray diffraction (XRD) using a SmartLab manufactured by RIGAKU. Cu Kα radiation was used as the light source. The temperature-variable XRD (XRD-DSC) measurement was performed under a nitrogen atmosphere by cooling to -20°C, then heating to 25°C or 55°C at 5°C/min, holding for 5 minutes, and then performing the measurement.

The full width at half maximum of the peak was defined as the width in 2θ at half of the peak intensity from the baseline to the peak top.

The diffraction intensity ratio [A55°C/A25°C] was calculated as follows.

The intensity of the maximum diffraction peak in the region where 2θ is 15° to 30° at a measurement temperature of 25°C was defined as [peak intensity A25°C]. The intensity of the maximum diffraction peak in the region where 2θ is 15° to 30° at a measurement temperature of 60°C was defined as [peak intensity A60°C]. As shown in the following equation, the diffraction intensity ratio [A60°C/A25°C] was calculated by dividing [peak intensity A60°C] by [peak intensity A25°C]. 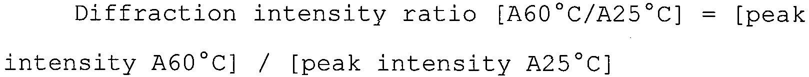 Diffraction intensity ratio [A60°C/A25°C] = [peak intensity A60°C] / [peak intensity A25°C]

The liquid medium was removed from the oil-resistant agent by natural drying at room temperature, followed by drying under reduced pressure for 24 hours.

### [Evaluation Example 1]

Using Paraffin Wax-115 (manufactured by NIPPON SEIRO CO., LTD.), Paraffin Wax-120 (manufactured by NIPPON SEIRO CO., LTD.), HNP-3 (manufactured by NIPPON SEIRO CO., LTD.), HNP-10 (manufactured by NIPPON SEIRO CO., LTD.), and HNP-51 (manufactured by NIPPON SEIRO CO., LTD.) as waxes, differential scanning calorimetry, temperature-variable X-ray diffraction measurement, and ¹H-NMR spectrum measurement were performed.

Table 1 shows the maximum endothermic peak temperature in the differential scanning calorimetry, [peak intensity A25°C] at a measurement temperature of 25°C, [peak intensity A60°C] at a measurement temperature of 60°C obtained by the temperature-variable X-ray diffraction measurement, the diffraction intensity ratio [A60°C/A25°C] calculated therefrom, and the results of the ¹H-NMR spectrum measurement.

### [Example 1]

2 g of HNP-3 (manufactured by NIPPON SEIRO CO., LTD.) as a wax, 0.2 g of polyethylene oxide alkyl ether (in which the alkyl group has 6 to 16 carbon atoms, HLB: 7), and 17.8 g of water were mixed to prepare an aqueous dispersion. After heating the aqueous dispersion to 85°C, the dispersion was treated with an ultrasonic homogenizer for 20 minutes to prepare a water-dispersible oil-resistant agent. The resulting water-dispersible oil-resistant agent exhibited the following properties.
Median diameter D50: 0.9 µm
Volume abundance ratio of particles with a size of 100 µm or larger: 0%
Volume abundance ratio of particles with a size of 10 µm or larger: 9%
Charge density: 21 µeq/g

The water-dispersible oil-resistant agent was added to an aqueous pulp slurry with a concentration of 0.5 wt% so that the ratio of the oil-resistant agent was 5 wt% in terms of the solid content, relative to pulp, to prepare a pulp composition. The pulp-containing water-dispersible oil-resistant agent was charged into an automatic mold molding machine to prepare a pulp mold.

The pulp mold was subjected to the practical oil resistance test at 65°C, which scored 4 points.

The results of the temperature-variable X-ray diffraction measurement of the solid component obtained by removing the liquid medium from the water-dispersible oil-resistant agent are shown in Table 2.

### [Example 2]

2 g of HNP-10 (manufactured by NIPPON SEIRO CO., LTD.) as a wax, 0.2 g of polyethylene oxide alkyl ether (in which the alkyl group has 6 to 16 carbon atoms, HLB: 7), and 17.8 g of water were mixed to prepare an aqueous dispersion. After heating the aqueous dispersion to 85°C, the dispersion was treated with an ultrasonic homogenizer for 20 minutes to prepare a water-dispersible oil-resistant agent. The resulting water-dispersible oil-resistant agent exhibited the following properties.
Median diameter D50: 0.9 µm
Volume abundance ratio of particles with a size of 100 µm or larger: 0%
Volume abundance ratio of particles with a size of 10 µm or larger: 11%
Charge density: 19 µeq/g

The water-dispersible oil-resistant agent was added to an aqueous pulp slurry with a concentration of 0.5 wt% so that the ratio of the oil-resistant agent was 5 wt% in terms of the solid content, relative to pulp, to prepare a pulp composition. The pulp-containing water-dispersible oil-resistant agent was charged into an automatic mold molding machine to prepare a pulp mold.

The pulp mold was subjected to the practical oil resistance test at 65°C, which scored 4 points.

The results of the temperature-variable X-ray diffraction measurement of the solid component obtained by removing the liquid medium from the water-dispersible oil-resistant agent are shown in Table 2.

### [Example 3]

2 g of HNP-51 (manufactured by NIPPON SEIRO CO., LTD.) as a wax, 0.2 g of polyethylene oxide alkyl ether (in which the alkyl group has 6 to 16 carbon atoms, HLB: 7), and 17.8 g of water were mixed to prepare an aqueous dispersion. After heating the aqueous dispersion to 85°C, the dispersion was treated with an ultrasonic homogenizer for 20 minutes to prepare a water-dispersible oil-resistant agent. The resulting water-dispersible oil-resistant agent exhibited the following properties.
Median diameter D50: 0.8 µm
Volume abundance ratio of particles with a size of 100 µm or larger: 0%
Volume abundance ratio of particles with a size of 10 µm or larger: 12%
Charge density: 25 µeq/g

The water-dispersible oil-resistant agent was added to an aqueous pulp slurry with a concentration of 0.5 wt% so that the ratio of the oil-resistant agent was 5 wt% in terms of the solid content, relative to pulp, to prepare a pulp composition. The pulp-containing water-dispersible oil-resistant agent was charged into an automatic mold molding machine to prepare a pulp mold.

The pulp mold was subjected to the practical oil resistance test at 65°C, which scored 4 points.

The results of the temperature-variable X-ray diffraction measurement of the solid component obtained by removing the liquid medium from the water-dispersible oil-resistant agent are shown in Table 2.

### [Example 4]

2 g of HNP-51 (manufactured by NIPPON SEIRO CO., LTD.) as a wax, 0.18 g of benzalkonium chloride, and 17.8 g of water were mixed to prepare an aqueous dispersion. After heating the aqueous dispersion to 85°C, the dispersion was treated with an ultrasonic homogenizer for 20 minutes to prepare a water-dispersible oil-resistant agent. The resulting water-dispersible oil-resistant agent exhibited the following properties.
Median diameter D50: 0.75 µm
Volume abundance ratio of particles with a size of 100 µm or larger: 0%
Volume abundance ratio of particles with a size of 10 µm or larger: 5%
Charge density: 80 µeq/g

The water-dispersible oil-resistant agent was added to an aqueous pulp slurry with a concentration of 0.5 wt% so that the ratio of the oil-resistant agent was 5 wt% in terms of the solid content, relative to pulp, to prepare a pulp composition. The pulp-containing water-dispersible oil-resistant agent was charged into an automatic mold molding machine to prepare a pulp mold.

The pulp mold was subjected to the practical oil resistance test at 65°C, which scored 4 points.

The results of the temperature-variable X-ray diffraction measurement of the solid component obtained by removing the liquid medium from the water-dispersible oil-resistant agent are shown in Table 2.

### [Example 5]

2 g of HNP-51 (manufactured by NIPPON SEIRO CO., LTD.) as a wax, 0.05 g of cationic starch, 0.04 g of an abietic acid derivative (rosin-based sizing agent), 0.04 g of formic acid, 0.04 g of acetic acid, and 7.83 g of water were mixed. After heating the mixture to 95°C, the mixture was treated with an ultrasonic homogenizer for 20 minutes to prepare a water-dispersible oil-resistant agent. The resulting water-dispersible oil-resistant agent exhibited the following properties.
Median diameter D50: 0.6 µm
Volume abundance ratio of particles with a size of 100 µm or larger: 0%
Volume abundance ratio of particles with a size of 10 µm or larger: 0.4%
Charge density: 16 µeq/g
Using the resulting water-dispersible oil-resistant agent, a pulp composition was prepared and a pulp mold was produced in the same manner as in Example 1.

The pulp mold was subjected to the practical oil resistance test at 65°C, which scored 4 points.

The results of the temperature-variable X-ray diffraction measurement of the solid component obtained by removing the liquid medium from the water-dispersible oil-resistant agent are shown in Table 2.

### [Example 6]

2 g of HNP-51 (manufactured by NIPPON SEIRO CO., LTD.) as a wax, 0.10 g of cationic starch, 0.04 g of an abietic acid derivative (rosin-based sizing agent), 0.02 g of formic acid, 0.02 g of acetic acid, and 7.87 g of water were mixed. After heating the mixture to 95°C, the mixture was treated with an ultrasonic homogenizer for 20 minutes to prepare a water-dispersible oil-resistant agent. The resulting water-dispersible oil-resistant agent exhibited the following properties.
Median diameter D50: 0.26 µm
Volume abundance ratio of particles with a size of 100 µm or larger: 0%
Volume abundance ratio of particles with a size of 10 µm or larger: 0.1%
Charge density: 39 µeq/g
Using the resulting water-dispersible oil-resistant agent, a pulp composition was prepared and a pulp mold was produced in the same manner as in Example 1.

The pulp mold was subjected to the practical oil resistance test at 65°C, which scored 4 points.

### [Comparative Example 1]

2 g of Paraffin Wax-115 (manufactured by NIPPON SEIRO CO., LTD.) as a wax, 0.2 g of polyethylene oxide alkyl ether (in which the alkyl group has 6 to 16 carbon atoms, HLB: 7), and 17.8 g of water were mixed to prepare an aqueous dispersion. After heating the aqueous dispersion to 85°C, the dispersion was treated with an ultrasonic homogenizer for 20 minutes to prepare a water-dispersible oil-resistant agent. The resulting water-dispersible oil-resistant agent exhibited the following properties.
Median diameter D50: 0.9 µm
Volume abundance ratio of particles with a size of 100 µm or larger: 0%
Volume abundance ratio of particles with a size of 10 µm or larger: 10%
Charge density: 22 µeq/g

The water-dispersible oil-resistant agent was added to an aqueous pulp slurry with a concentration of 0.5 wt% so that the ratio of the oil-resistant agent was 5 wt% in terms of the solid content, relative to pulp, to prepare a pulp composition. The pulp-containing water-dispersible oil-resistant agent was charged into an automatic mold molding machine to prepare a pulp mold.

The pulp mold was subjected to the practical oil resistance test at 65°C, which scored 0 points.

The results of the temperature-variable X-ray diffraction measurement of the solid component obtained by removing the liquid medium from the water-dispersible oil-resistant agent are shown in Table 2.

### [Comparative Example 2]

2 g of Paraffin Wax-120 (manufactured by NIPPON SEIRO CO., LTD.) as a wax, 0.2 g of polyethylene oxide alkyl ether (in which the alkyl group has 6 to 16 carbon atoms, HLB: 7), and 17.8 g of water were mixed to prepare an aqueous dispersion. After heating the aqueous dispersion to 85°C, the dispersion was treated with an ultrasonic homogenizer for 20 minutes to prepare a water-dispersible oil-resistant agent. The resulting water-dispersible oil-resistant agent exhibited the following properties.
Median diameter D50: 0.9 µm
Volume abundance ratio of particles with a size of 100 µm or larger: 0%
Volume abundance ratio of particles with a size of 10 µm or larger: 11%
Charge density: 21 µeq/g

The water-dispersible oil-resistant agent was added to an aqueous pulp slurry with a concentration of 0.5 wt% so that the ratio of the oil-resistant agent was 5 wt% in terms of the solid content, relative to pulp, to prepare a pulp composition. The pulp-containing water-dispersible oil-resistant agent was charged into an automatic mold molding machine to prepare a pulp mold.

The pulp mold was subjected to the practical oil resistance test at 65°C, which scored 0 points.

The results of the temperature-variable X-ray diffraction measurement of the solid component obtained by removing the liquid medium from the water-dispersible oil-resistant agent are shown in Table 2.

**[Table 1]**

| Wax | Differential scanning calorimetry | Temperature-variable X-ray diffraction measurement | | | | | ¹H-NMR spectrum | | |
|---|---|---|---|---|---|---|---|---|---|
| | | Measurement temperature 25°C | | Measurement temperature 60°C | | Diffraction Intensity ratio [A60°C /A25°C] | 0.79 ppm or more and 0.93 ppm or less [integral value A] | 1.05 ppm or more and 1.47 ppm or less [integral value B] | Integral value ratio [integral value B]/[integral value A] |
| | Maximum endothermic peak temperature | Diffraction angle of maximum peak in region where 2θ is 15° to 30° (2θ) | [Peak intensity A25°C] | Diffraction angle of maximum peak in region where 2θ is 15° to 30° (2θ) | [Peak intensity A60°C] | | | | |
| Paraffin Wax-115 | 48°C | 21.4° | 125008 | 18.9° | 12366 | 0.1 | 6.00 | 42.85 | 7.14 |
| Paraffin Wax-120 | 50°C | 21.5° | 117508 | 21.4° | 30991 | 0.26 | 6.00 | 44.4 | 7.4 |
| HNP-3 | 64°C | 21.5° | 120650 | 21.4° | 85166 | 0.71 | 6.00 | 58.7 | 9.78 |
| HNP-10 | 75°C | 21.5° | 114125 | 21.3° | 88625 | 0.78 | 6.00 | 68.5 | 11.4 |
| HNP-51 | 77°C | 21.5° | 51441 | 21.4° | 45133 | 0.88 | 6.00 | 70.29 | 11.75 |

**[Table 2]**

| | Water-dispersible oil-resistant agent | | Evaluation | Temperature-variable X-ray diffraction measurement of solid component obtained by removing liquid medium from oil-resistant agent | | | | |
|---|---|---|---|---|---|---|---|---|
| | | | | Measurement temperature 25°C | | Measurement temperature 60°C | | Diffraction intensity ratio [A60°C /A25°C] |
| | Type of wax | Dispersant | Practical oil resistance test 65°C | Diffraction angle of maximum peak in region where 2θ is 15° to 30° (2θ) | [Peak intensity A25°C] | Diffraction angle of maximum peak in region where 2θ is 15° to 30° (2θ) | [Peak intensity A60°C] | |
| Example 1 | HNP-3 | Polyethylene oxide alkyl ether | 4 points | 21.4° | 13298 | 18.9° | 8776.68 | 0.66 |
| Example 2 | HNP-10 | Polyethylene oxide alkyl ether | 4 points | 21.5° | 12395 | 21.4° | 9296.25 | 0.75 |
| Example 3 | HNP-51 | Polyethylene oxide alkyl ether | 4 points | 21.5° | 34029 | 21.4° | 27903.78 | 0.82 |
| Example 4 | HNP-51 | Benzalkonium chloride | 4 points | 21.5° | 54358 | 21.4° | 45117.14 | 0.83 |
| Example 5 | HNP-51 | Cationic starch | 4 points | 21.5° | 48578 | 21.4° | 40319.74 | 0.83 |
| Comparative Example 1 | Paraffin Wax -115 | Polyethylene oxide alkyl ether | 0 points | 21.4° | 98984 | 18.7° | 14847.6 | 0.15 |
| Comparative Example 2 | Paraffin Wax -120 | Polyethylene oxide alkyl ether | 0 points | 21.5° | 898382 | 21.4° | 188660.22 | 0.21 |

## Claims

1. An oil-resistant agent comprising a wax, wherein,
in the ¹H-NMR spectrum of the wax, the ratio of an integral value [integral value B] of a signal observed at a chemical shift of 1.05 ppm or more and 1.47 ppm or less to an integral value [integral value A] of a signal observed at a chemical shift of 0.79 ppm or more and 0.93 ppm or less, [integral value B]/[integral value A], is 9 or more.

2. The oil-resistant agent according to claim 1, wherein,
in the temperature-variable X-ray diffraction measurement of the wax, the diffraction intensity ratio [A60°C]/[A25°C] of a maximum peak intensity [A60°C] at a measurement temperature of 60°C to a maximum peak intensity [A25°C] at a measurement temperature of 25°C in the region where 2θ is 15° or more and 30° or less is 0.3 or more.

3. The oil-resistant agent according to claim 1 or 2, wherein the wax is a petroleum wax.

4. The oil-resistant agent according to any one of claims 1 to 3, wherein the wax is at least one selected from the group consisting of a paraffin wax and a microcrystalline wax.

5. The oil-resistant agent according to any one of claims 1 to 4, wherein the wax has a melting point of 55°C or more.

6. The oil-resistant agent according to any one of claims 1 to 5, wherein the oil-resistant agent is an aqueous dispersion.

7. The oil-resistant agent according to any one of claims 1 to 6, wherein
the oil-resistant agent comprises a dispersant, and
the dispersant is at least one selected from the group consisting of a nonionic dispersant, an anionic dispersant, and a cationic dispersant.

8. The oil-resistant agent according to any one of claims 1 to 7, wherein
the oil-resistant agent is an aqueous dispersion,
the oil-resistant agent comprises a dispersant, and
the volume median diameter (D50) of the oil-resistant agent, as measured by laser diffraction scattering, is 0.01 µm or more and 1 µm or less.

9. The oil-resistant agent according to any one of claims 1 to 8, wherein the oil-resistant agent has a charge density of -600 µeq/g or more and 600 µeq/g or less.

10. The oil-resistant agent according to any one of claims 1 to 9, wherein
the oil-resistant agent comprises a liquid medium, and
in the temperature-variable X-ray diffraction measurement of a residue obtained by removing the liquid medium from the oil-resistant agent, the diffraction intensity ratio [A60°C]/[A25°C] of a maximum peak intensity [A60°C] at a measurement temperature of 60°C to a maximum peak intensity [A25°C] at a measurement temperature of 25°C in the region where 2θ is 15° or more and 30° or less is 0.3 or more.

11. The oil-resistant agent according to any one of claims 2 to 10, wherein
the ratio of integral values [integral value B]/[integral value A] is 9.5 or more and 12 or less, and
the diffraction intensity ratio [A60°C]/[A25°C] is 0.5 or more and 0.9 or less.

12. The oil-resistant agent according to any one of claims 1 to 11, wherein the oil-resistant agent is for a pulp product.

13. The oil-resistant agent according to claim 12, wherein the pulp product is a product for food contact.

14. The oil-resistant agent according to claim 12 or 13, wherein the oil-resistant agent is for internal addition.

15. A pulp composition comprising the oil-resistant agent according to any one of claims 1 to 14 and a pulp substrate.

16. A pulp product obtained by treating a pulp substrate with the oil-resistant agent according to any one of claims 1 to 14.

17. A method for producing a pulp product, comprising treating a pulp substrate with the oil-resistant agent according to any one of claims 1 to 14.
